# EUROPÄISCHE PATENTSCHRIFT

(11) **EP 0 703 394 B1**
(45) Veröffentlichungstag und Bekanntmachung des Hinweises auf die Patenterteilung: **14.10.1998**
(21) Anmeldenummer: 95104435.3
(22) Anmeldetag: 25.03.1995
(51) Int. Cl.: F16L 3/10, F16L 55/033

(54) **Rohrschelle**
Pipe clamp
Collier de serrage

(30) Priorität: 21.09.1994 DE 4433640
(43) Veröffentlichungstag der Anmeldung: 27.03.1996
(73) Patentinhaber: Wilhelm Ungeheuer Söhne Befestigungssysteme GmbH, 61389 Schmitten (DE)
(72) Erfinder: Ungeheuer, Edgar, D-61389 Schmitten (DE)
(74) Vertreter: Grommes, Karl F., Dr.

(56) Entgegenhaltungen:
- EP-A- 0 188 649
- DE-A- 3 439 418
- DE-A- 4 039 260
- US-A- 2 998 217

## Beschreibung

### Technisches Gebiet

Die Erfindung betrifft eine Rohrschelle, wie sie in dem Gattungsbegriff des Anspruchs 1 näher definiert ist.

### Stand der Technik

Eine derartige Rohrschelle ist beispielsweise aus der DE-GM 77 00 802 bekannt. Sie besteht aus einem ringförmigen Schellenkörper, dessen Innenseite mittels einer seine Seitenränder umgreifenden elastischen Einlage, z.B. aus Gummi, abgedeckt ist. Die beiden Enden des Schellenkörpers sind nach außen gerichtet und bilden eine mit Hilfe einer Schließschraube verschließbare Öffnung. Hierzu weist das erste Ende des Schellenkörpers einen in der Regel nach außen offenen Einschnitt für den Eingriff der Schließschraube auf, während sich in dem zweiten nach außen gerichteten Ende eine Gewindebohrung befindet, in die die Schließschraube einschraubbar ist.

Nachteilig ist bei dieser bekannten Rohrschelle vor allem, daß eine schnelle Montage der Schelle um ein zu befestigendes Rohr häufig nicht möglich ist, weil die in die Gewindebohrung eingeschraubte Schließschraube praktisch unbeweglich und daher häufig mit ihrem Schaft nur schwer in den offenen Einschnitt des ersten Endes des Schellenkörpers einführbar ist.

Aus der DE 34 39 418 A1 ist ferner eine Rohrschelle bekannt, bei der zur Durchführung einer einfachen Montage das zweite nach außen gerichtete Ende des Schellenkörpers als separates Winkelstück ausgebildet ist, welches schwenkbar an dem Schellenkörper befestigt wird. Nachteilig ist bei dieser Rohrschelle vor allem die relativ aufwendige Fertigung des Schellenkörpers.

### Darstellung der Erfindung

Der vorliegenden Erfindung liegt die Aufgabe zugrunde, eine Rohrschelle der eingangs erwähnten Art anzugeben, die eine einfache Montage der zu befestigenden Rohre erlaubt und die überdies einfach und damit kostengünstig herstellbar ist.

Diese Aufgabe wird erfindungsgemäß durch die Merkmale des kennzeichnenden Teils des Anspruchs 1 gelöst. Die Unteransprüche geben besonders vorteilhafte Ausgestaltungen der Erfindung wieder.

Der Erfindung liegt im wesentlichen der Gedanke zugrunde, ähnlich wie im Falle der eingangs erwähnten DE-GM 77 00 802, einen Schellenkörper mit zwei starr nach außen gerichteten Enden zu verwenden. Allerdings wird, anders als bei der vorstehend erwähnten Gebrauchsmusterschrift, in dem zweiten Ende des Schellenkörpers nicht eine Gewindebohrung eingebracht, sondern eine nutenförmige Ausnehmung, in der sich eine Nutmutter befindet. Aufgrund des Spiels zwischen den Nutflächen (Außenpaßflächen) der Nutmutter und den angrenzenden Innenpaßflächen der nutenförmigen Ausnehmung wird eine entsprechende Beweglichkeit der Schraube bzw. Nutmutter gegenüber dem Schellenkörper gewährleistet.

Um die für eine einfache Montage, insbesondere eine Einhandmontage, erforderliche Beweglichkeit der Verbindungsschraube bzw. Nutmutter noch zu erhöhen, hat es sich als besonders vorteilhaft erwiesen, die Breite der Führungsnut der Nutmutter größer zu wählen als die Wandstärke der Seitenränder des Schellenkörpers, die in die Führungsnuten eingreifen. Dadurch wird bei der Montage beim Zusammendrücken der beiden Enden des Schellenkörpers zunächst die in der Nutmutter geführte Verbindungsschraube mit dem Schraubenkopf gegen das erste Ende des Schellenkörpers gedrückt und dort nach oben über den offenen Einschnitt der Nut geführt, so daß sich anschließend der Schraubenkopf auf der dem zweiten Ende des Schellenkörpers abgewandten Seite befindet und von dieser Seite gegen das erste Ende des Schellenkörpers drückt, während der Schraubenschaft durch die entsprechende Ausnehmung des Einschnittes hindurchgeführt ist.

Bei einer vorteilhaften Weiterbildung der Erfindung erstreckt sich das zweite Ende des Schellenkörpers bis in den ringförmigen Teil und weist dort einen Durchmesser auf, der größer ist als der Außendurchmesser der Nutmutter, so daß das Gewindeteil auf einfache Weise von dieser Seite in die nutenförmige Ausnehmung einführbar ist. Um dabei zu vermeiden, daß die Nutmutter, etwa bei herausgeschraubter Schließschraube, aus der nutenförmigen Ausnehmung des Schellenkörpers herausrutscht, deckt die die Seitenränder umgreifende elastische Einlage die nutenförmige Ausnehmung in dem ringförmigen Teil des Schellenkörpers ab.

Je nach Verwendung der erfindungsgemäßen Rohrschellen können diese in an sich bekannter Weise sowohl einteilig als auch zweiteilig, d.h. aus zwei halbrunden Bügeln, die scharnierartig miteinander verbunden sind, ausgebildet sein.

### Kurze Beschreibung der Zeichnung

Weitere Einzelheiten und Vorteile der Erfindung werden im folgenden anhand von in Figuren dargestellten Ausführungsbeispielen erläutert. Es zeigen:
- Fig. 1: den Schnitt einer geöffneten erfindungsgemäßen Rohrschelle in Vorderansicht;
- Fig. 2: eine Unteransicht auf die in Fig.1 dargestellte Rohrschelle im Bereich des zweiten Endes des Schellenkörpers mit weggelassener Schließschraube;
- Fig. 3: eine vergrößerte Darstellung des in Fig.1 mit III bezeichneten Ausschnittes;
- Fig. 4: einen Querschnitt durch die in Fig.3 dargestellte Nutmutter entlang der dort mit IV-IV bezeichneten Schnittlinie und
- Fig. 5: einen Fig.4 entsprechenden Querschnitt einer ein zweites Ausführungsbeispiel betreffenden Nutmutter.

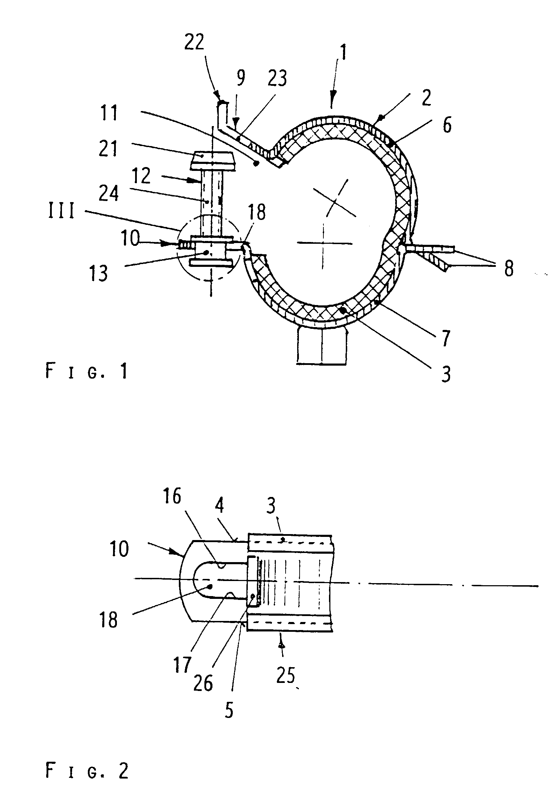

In Fig.1 ist mit 1 eine erfindungsgemäße Rohrschelle bezeichnet, die im wesentlichen aus einem ringförmigen Schellenkörper 2 und einer die Innenseite des Schellenkörpers abdeckenden elastischen Gummieinlage 3 besteht, welche die Seitenränder 4, 5 (Fig.2) des Schellenkörpers 2 umgreift.

Der Schellenkörper 2 ist bei dem dargestellten Ausführungsbeispiel zweiteilig ausgebildet und setzt sich aus zwei halbrunden Bügeln 6, 7 zusammen, die scharnierartig mittels einer Steckverbindung 8 in an sich bekannter Weise miteinander verbunden sind. Sowohl das erste Ende 9 als auch das zweite Ende 10 des Schellenkörpers 2 sind nach außen gerichtet und begrenzen eine Öffnung 11, durch welche hindurch das jeweils zu befestigende Rohr (nicht dargestellt) geführt wird, und die mittels einer Schließschraube 12 verschließbar ist.

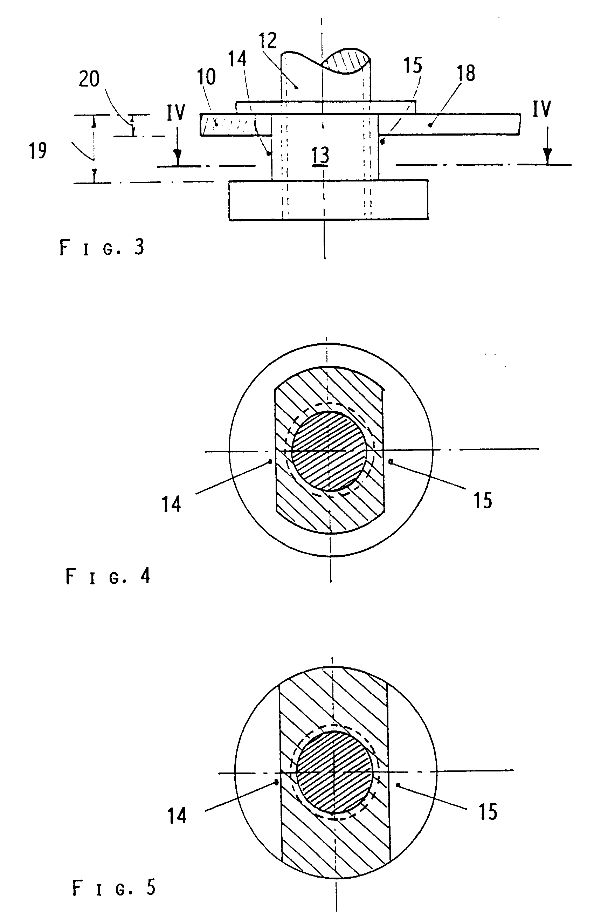

In der in Fig.1 dargestellten geöffneten Stellung der Rohrschelle 1 ist die als Kopfschraube ausgebildete Schließschraube 12 in eine im wesentlichen zylinderförmige Nutmutter 13 eingeschraubt, in deren Führungsnuten 14, 15 (Fig.3 und 4) die Seitenränder 16, 17 (Fig.2) einer in dem zweiten Ende 10 des Schellenkörpers 2 vorgesehenen nutenförmigen Ausnehmung 18 eingreifen. Dabei ist die Breite 19 der Führungsnuten 14, 15 der Nutmutter 13 (Fig.3) größer gewählt als die Wandstärke 20 der Seitenränder 16, 17 des Schellenkörpers 2. Hierdurch wird bei der Montage beim Zusammendrücken der beiden Enden 9, 10 des Schellenkörpers 2 zunächst die in der Nutmutter 13 geführte Schließschraube 12 mit dem Schraubenkopf 21 gegen das erste Ende 9 des Schellenkörpers 2 gedrückt und dort nach oben über einen offenen Einschnitt 22 geführt, so daß sich anschließend der Schraubenkopf 21 auf der dem zweiten Ende 10 des Schellenkörpers 2 abgewandten Seite befindet und von dieser Seite gegen das erste Ende 9 drückt, während der Schraubenschaft 24 durch die Ausnehmung 23 des Einschnittes 22 hindurchgeführt ist. Durch Anziehen der Schließschraube 12, z.B. mittels eines Schraubenziehers, können dann anschließend die Enden 9 und 10 des Schellenkörpers miteinander verbunden werden.

Um die Nutmutter 13 in die nutenförmige Ausnehmung 18 einzuführen, erstreckt sich diese Ausnehmung bis in den ringförmigen Teil 25 des Schellenkörpers 2 und weist dort eine Erweiterung 26 (Fig.2) auf, deren Durchmesser derart gewählt ist, daß die Nutmutter 13 von dieser Seite in die nutenförmige Ausnehmung 18 eingeschoben werden kann.

Um dabei zu vermeiden, daß die Nutmutter 13, etwa bei herausgeschraubter Schließschraube 12, aus der nutenförmigen Ausnehmung 18 des Schellenkörpers 2 herausrutscht, deckt die die Seitenränder 4, 5 umgreifende elastische Gummieinlage 3 die nutenförmige Ausnehmung 18 in dem ringförmigen Teil 25 des Schellenkörpers 2 ab.

Die Erfindung ist selbstverständlich nicht auf das vorstehend beschriebene Ausführungsbeispiel beschränkt. So ist es keineswegs zwingend erforderlich, daß das erste Ende 9 des Schellenkörpers 2 einen offenen Einschnitt 22 aufweist. Vielmehr kann die entsprechende Ausnehmung 23 auch geschlossen ausgebildet sein und eine zusätzliche Durchlaßöffnung für den Schraubenkopf 21 vorsehen. Ferner braucht die Nutmutter 13 nicht zwingend -wie in den Figuren 1 und 4 angedeutet- eine umlaufende Nut aufzuweisen, sondern es kann ausreichen, lediglich die Führungsnuten 14 und 15 vorzusehen. Ein entsprechendes Ausführungsbeispiel ist in Fig. 5 dargestellt.

## Patentansprüche

1. Rohrschelle mit einem ringförmigen Schellenkörper (2), dessen Innenseite mittels einer seine Seitenränder (4,5) umgreifenden elastischen Einlage (3) abgedeckt ist und dessen beide Enden (9,10) nach außen gerichtet sind und eine mittels einer Schließschraube (12) verschließbare Öffnung (11) begrenzen, wobei das erste Ende (9) des Schellenkörpers (2) eine Ausnehmung (23) für die Durchführung des Schaftes (24) der Schließschraube (12) aufweist und wobei das zweite Ende (10) des Schellenkörpers (2) mit einer Mutter (13) verbindbar ist, **gekennzeichnet durch** die Merkmale:
a) Bei der Mutter (13) handelt es sich um eine mit zwei gegenüberliegenden Führungsnuten (14,15) versehene Nutmutter;
b) die Nutmutter (13) ist in einer nutenförmigen Ausnehmung (18) im Bereich des zweiten Endes (10) des Schellenkörpers (2) einschiebbar angeordnet, wobei die Seitenränder (16,17) der nutenförmigen Ausnehmung (18) in die Führungsnuten (14,15) der Nutmutter (13) eingreifen;
c) das Spiel zwischen den Nutflächen der Nutmutter (13) und den angrenzenden Innenpaßflächen der Seitenränder (16,17) der nutenförmigen Ausnehmung (18) sowie die Breite (19) der Führungsnuten (14,15) sind derart gewählt, daß eine vorgebbare Beweglichkeit der Nutmutter (13) und damit auch der Schließschraube (12) gewährleistet ist.

2. Rohrschelle nach Anspruch 1, **dadurch gekennzeichnet**, daß die nutenförmige Ausnehmung (18) des zweiten Endes (10) des Schellenkörpers (2) sich bis in den ringförmigen Teil (25) des Schellenkörpers () erstreckt und dort einen Durchmesser aufweist, der größer ist als der Außendurchmesser der Nutmutter (13), so daß die Nutmutter (13) von dieser Seite in die nutenförmige Ausnehmung (18) einschiebbar ist.

3. Rohrschelle nach Anspruch 1 oder 2, **dadurch gekennzeichnet**, daß der Schellenkörper (2) sich aus zwei halbrunden Bügeln (6,7) zusammensetzt, die scharnierartig mittels einer Steckverbindung (8) miteinander verbunden sind.

4. Rohrschelle nach einem der Ansprüche 1 bis 3, **dadurch gekennzeichnet**, daß die die Seitenränder (4,5) umgreifende elastische Einlage (3) die nutenförmige Ausnehmung (18) in dem ringförmigen Teil (25) des Schellenkörpers (2) abdeckt.

5. Rohrschelle nach einem der Ansprüche 1 bis 4, **dadurch gekennzeichnet**, daß die Ausnehmung (23) des ersten Endes (9) des Schellenkörpers (2) einen nach außen offenen Einschnitt (22) bildet.

6. Rohrschelle nach einem der Ansprüche 1 bis 5, **dadurch gekennzeichnet**, daß die elastische Einlage (3) aus Gummi besteht.

7. Rohrschelle nach einem der Ansprüche 1 bis 6, **dadurch gekennzeichnet**, daß die Nutmutter (13) eine im wesentlichen zylinderförmige Außenkontur aufweist.

## Claims

1. A pipe clip with an annular clip body (2), the inner face of which is covered by means of an elastic insert (3) embracing its lateral edges (4,5) and the two ends (9, 10) of which are directed outwards and delimit an opening (11) which is closable by means of a closure screw (12), wherein the first end (9) of the clip body (2) has a recess (23) for the passing of the shaft (24) of the closure screw (12) and wherein the second end (10) of the clip body (2) is connectable with a nut (13), characterised by the features:
a) the nut (13) is a grooved nut provided with two guide grooves (14,15) lying opposite each other;
b) the grooved nut (13) is arranged so as to be insertable in a groove-shaped recess (18) in the region of the second end (10) of the clip body (2), wherein the lateral edges (16, 17) of the groove-shaped recess (18) engage into the guide grooves (14, 15) of the grooved nut (13);
c) the play between the groove faces of the grooved nut (13) and the adjoining internal fitting faces of the lateral edges (16, 17) of the groove-shaped recess (18) and also the width (19) of the guide grooves (14, 15) are selected such that a predeterminable mobility of the grooved nut (13) and hence also of the closure screw (12) is ensured.

2. A pipe clip according to Claim 1, characterised in that the groove-shaped recess (18) of the second end (10) of the clip body (2) extends up into the annular part (25) of the clip body (2) and has a diameter there which is greater than the external diameter of the grooved nut (13), so that the grooved nut (13) is insertable from this side into the groove-shaped recess (18).

3. A pipe clip according to Claim 1 or 2, characterised in that the clip body (2) is composed of two semicircular brackets (6, 7) which are connected with each other in the manner of a hinge by means of a plug connection (8).

4. A pipe clip according to one of Claims 1 to 3, characterised in that the elastic insert (3) embracing the lateral edges (4, 5) covers the groove-shaped recess (18) in the annular part (25) of the clip body (2).

5. A pipe clip according to one of Claims 1 to 4, characterised in that the recess (23) of the first end (9) of the clip body (2) forms an outwardly open slot (22).

6. A pipe clip according to one of Claims 1 to 5, characterised in that the elastic insert (3) consists of rubber.

7. A pipe clip according to one of Claims 1 to 6, characterised in that the grooved nut (13) has a substantially cylindrical outer contour.

## Revendications

1. Collier de serrage avec un corps de collier (2) à forme annulaire, dont la face intérieure est recouverte au moyen d'une garniture (3) élastique, entourant ses bords latéraux (4,5), et dont les deux extrémités (9,10) sont orientées vers l'extérieur et délimitent une ouverture (11) pouvant être obturée au moyen d'une vis de fermeture (12), la première extrémité (9) du corps de collier (2) présentant un évidement (23), destiné à faire passer la tige (24) de la vis de fermeture (12), et la deuxième extrémité (10) du corps de collier (2) étant susceptible d'être reliée à un écrou (13), caractérisé par les propriétés ci-après:
a) concernant l'écrou (13), il s'agit d'un écrou cylindrique à encoches doté de deux rainures de guidage (14,15) opposées;
b) l'écrou cylindrique à encoches (13) est disposé de manière à pouvoir être introduit dans un évidement (18) en forme de rainure, ménagé dans la zone de la deuxième extrémité (10) du corps de collier (2), les bords latéraux (16,17) de l'évidement (18) en forme de nervures s'engageant dans les rainures de guidage (14,15) de l'écrou cylindrique à encoches (13);
c) le jeu, entre les surfaces de rainures de l'écrou cylindrique à encoches (13) et les surfaces d'ajustement intérieures limitrophes des bords latéraux (16,17) de l'évidement (18) en forme de rainure, ainsi que la largeur (19) des rainures de guidage (14,15), sont choisis tel qu'une mobilité, pouvant être prédéterminée, de l'écrou cylindrique à encoches (13) et ainsi également de la vis de fermeture (12) est assurée.

2. Collier de serrage selon la revendication 1, caractérisé en ce que l'évidement (18) en forme de rainure de la deuxième extrémité (10) du corps de collier (2) s'étend jusque dans la partie (25) à forme annulaire du corps de collier (2) et présente à cette endroit un diamètre qui est supérieur au diamètre extérieur de l'écrou cylindrique à encoches (13), si bien que l'écrou cylindrique à encoches (13) peut être introduit depuis ce coté dans l'évidement (18) en forme de rainure.

3. Collier de serrage selon la revendication 1 ou 2, caractérisé en ce que le corps de collier (2) est constitué de deux étriers (6,7) demi ronds, reliant ensemble la façon d'une charnière au moyen d'une liaison à enfichage (8).

4. Collier de serrage selon l'une des revendications 1 à 3, caractérisé en ce que la garniture (3) élastique entourant les bords latéraux (4, 5) recouvre l'évidement (18) en forme de rainure dans la partie (25) à forme annulaire du corps de collier (2).

5. Collier de serrage selon l'une des revendications 1 à 4, caractérisé en ce que l'évidement (23) de la première extrémité (9) du corps de collier (2) constitue une entaille (22) ouverte vers l'extérieur.

6. Collier de serrage selon l'une des revendications 1 à 5, caractérisé en ce que la garniture élastique (3) est réalisée en caoutchouc.

7. Collier de serrage selon l'une des revendications 1 à 6, caractérisé en ce que l'écrou cylindrique à encoches (13) présente un contour extérieur à forme sensiblement cylindrique.
